# FASCICULE DE BREVET EUROPEEN

(11) **EP 2 538 376 B1**
(45) Date de publication et mention de la délivrance du brevet: **12.06.2019**
(21) Numéro de dépôt: 11305774.9
(22) Date de dépôt: 20.06.2011
(51) Int. Cl.: G06Q 10/00

(54) **Système de prescription de maintenance d'un moteur d'hélicoptère**
Wartungsvorschriftensystem für einen Helikoptermotor
System for prescribing maintenance of a helicopter engine

(43) Date de publication de la demande: 26.12.2012
(73) Titulaire: Safran Helicopter Engines, 64510 Bordes (FR)
(72) Inventeur: Kamenka, Alexandre, 40440 Ondres (FR); Maille, Serge, 40440 Ondres (FR); Prat, François, 64600 Anglet (FR); Boucon, Jean-Louis, 64800 Nay (FR); Debbouz, Nadir, 40300 Port de Lanne (FR); Vignes, Jean-Stéphane, 64600 Anglet (FR); Dumez-Vinit, Marie-Caroline, 40230 St. Jean de Marsacq (FR); Faupin, François, 64100 Bayonne (FR); Blay, Antoine, 40220 Tarnos (FR); Vieillard-Baron, Didier, 40100 Dax (FR); Boutin, Ludovic, 40530 Labenne (FR); Boureau, Philippe, 65270 St. Pee de Bigorre (FR); Gaultier, Christophe, 64100 Bayonne (FR); Mestdagh, Hélène, 64480 Jatxou (FR); Nuffer, Nicolas, 64200 Biarritz (FR); Lamazere, Fabien, 64500 Ciboure (FR)
(74) Mandataire: Cabinet Laurent & Charras

(56) Documents cités:
- US-A1- 2008 034 257
- US-B1- 6 408 258

## Description

### DOMAINE DE L'INVENTION

L'invention a trait au domaine des moteurs d'hélicoptère, et plus particulièrement à la maintenance de ceux-ci.

### ETAT DE LA TECHNIQUE

Un moteur d'hélicoptère est un système dit « critique » dont les éléments constitutifs, pièces et ensembles fonctionnels de pièces, présentent une très forte variabilité.

Tout d'abord, comme tout système mécanique, chacune des pièces et des ensembles fonctionnels de pièces, ou « modules », est soumis à l'usure, à l'encrassement, au vieillissement des lubrifiants, etc.., ou de manière plus générale soumis à une modification de leurs caractéristiques qui les écarte de leur comportement souhaité. Dans le cas d'un moteur d'hélicoptère, les contraintes techniques sont telles pour assurer la sécurité des vols qu'à la fois le nombre d'opérations de maintenances et la fréquence des maintenances sont importantes, et notamment notablement plus élevés que le nombre d'opérations de maintenance et la fréquence de maintenance des moteurs d'avions par exemple.

Ensuite, pour une même définition de moteurs, les conditions d'emploi sont nettement plus variables que pour un moteur d'avion. Alors qu'un moteur d'avion de ligne effectue typiquement un vol de ligne en passant 90% de son temps de vol en croisière avec des paramètres stables et constants, une même classe de moteur d'hélicoptère peut servir à effectuer des missions pour lesquelles les sollicitations sont très diverses : missions d'élingage de charge demandant de manière successive et répétée des besoins de puissance importants et se déroulant à proximité du sol et donc des poussières et autres aérosols, des missions de transport de passager avec une phase de croisière importante en altitude, des missions de sauvetage en mer avec des temps d'exposition au brouillard salin important, des missions de combat dont le profil est éminemment variable...

Ensuite, un moteur d'hélicoptère est un système qui est l'objet d'une recherche constante d'amélioration de ses performances de la part du constructeur. Ainsi, le constructeur d'un moteur d'hélicoptère peut prescrire jusqu'à des centaines de modifications d'un moteur, portant notamment sur des modifications des caractéristiques des pièces. Par exemple, le nombre de prescriptions de modifications des moteurs d'hélicoptère de la classe « ARRIEL » de la société Turboméca est aujourd'hui supérieur à 300, ce qui représente un nombre de configurations théoriques possibles supérieur à 2³⁰⁰ pour un moteur de cette classe, bien que parmi ces configurations possibles, certaines seulement, définies par des règles strictes d'implication et/ou d'exclusion entre les modifications, sont autorisées à naviguer. En effet, un moteur est un système très optimisé, de par les contraintes de conception, sensiblement plus qu'un moteur d'avion par exemple. A titre illustratif, un moteur de la classe « ARRIEL » développe une puissance de 700 chevaux pour un poids de 109 kg, résultat obtenu en optimisant à l'extrême chaque pièce et chaque module les uns par rapport aux autres. C'est pourquoi, quand bien même le constructeur émet des prescriptions de modification, cela ne signifie pourtant pas que lesdites modifications sont nécessairement mises en oeuvre par l'utilisateur d'un moteur. On constate d'ailleurs, que chaque moteur présente une configuration qui en général lui est propre et nettement différente de la configuration d'autres moteurs de la même classe.

Ainsi donc, un moteur d'hélicoptère est un système critique, aux éléments fortement interdépendants, pouvant prendre un nombre de configurations possibles très élevé, et objet d'un nombre d'opérations de maintenance également élevé, qui impactent directement les performances et la sécurité du moteur, à tout le moins sans aucune commune mesure avec d'autres types de moteurs à usage commerciaux, y compris les moteurs des avions de ligne.

Une telle complexité est impossible à gérer en intégrant l'ensemble des détails par un technicien de maintenance humain. Ainsi les concepts de maintenance déployés font travailler les techniciens de maintenance de niveau 1 et 2 sur un modèle de représentation simplifié et synthétique de l'usage et de la configuration du moteur : les paramètres d'usage sont limités en nombre (typiquement deux à trois paramètres) et la gestion de configuration se limite aux premiers étages de la nomenclature en réduisant le nombre de modifications visibles au niveau 1 et 2. Pour assurer la sécurité des vols quelles que soient les conditions d'exploitation du moteur (qui ne peuvent pas être traduites en détail par les paramètres synthétiques) des marges importantes de sécurité sont appliquées aux prescriptions de maintenance. Ainsi donc, la maintenance d'un moteur d'hélicoptère est en fait largement sous-optimale, et en outre possiblement non constante puisque essentiellement dépendante de la compétence des différents techniciens de maintenances intervenant sur le moteur.

Le document US 6408258 propose de déterminer le temps restant avant d'appliquer une maintenance d'un hélicoptère en analysant les sollicitations subies par l'hélicoptère au cours des vols successifs. Cependant, ce document US 6408258 ne prend pas en compte la complexité de la disparité des moteurs d'hélicoptère ni l'impact des maintenances précédentes sur l'évolution de cette disparité.

### EXPOSE DE L'INVENTION

Le but de la présente invention est de proposer un système de prescription de maintenance qui détermine des opérations de maintenance d'un moteur d'hélicoptère en tenant compte de la complexité de la maintenance déjà appliquée, des conditions d'exploitation rencontrées en vol et de la configuration particulière du moteur.

A cet effet, l'invention a pour objet un système de prescription de maintenance de moteurs d'hélicoptère d'une même classe de moteurs, constitués d'éléments variables au cours du temps en fonction de leur état technique, d'échanges standard de pièces entre les moteurs et de remplacements de pièces par des pièces différentes, selon les caractéristiques de la revendication 1.

Par « données opérationnelles d'état d'usage », on entend des données objectives décrivant les conditions subies en vol ou au sol par les moteurs au cours de leur exploitation et sur la base desquelles une décision est prise pour intervenir sur les moteurs. A titre d'exemple illustratif, une donnée d'état d'usage est le nombre d'heures de vol de l'hélicoptère, une révision du moteur d'hélicoptère étant réalisée par exemple toutes les 3000 heures de vol.

Par « données opérationnelles de modifications possibles des moteurs », on entend des données décrivant l'ensemble des modifications, ou configurations, possibles sur les moteurs d'une même classe.

Par « données opérationnelles de modifications autorisées des moteurs », on entend des données décrivant l'ensemble des configurations autorisées, ou « navigables », parmi les configurations possibles des moteurs d'une même classe.

Par « données opérationnelles de définition de plans de maintenance », on entend des données décrivant l'ensemble des maintenances qui sont déclenchées de manière prédictible pour tout moteur d'une même classe, indépendamment de leurs configurations particulières, sur la base de la valeur du ou des indicateurs d'état d'usage des moteurs.

Par « données opérationnelles de description de causes probables d'événements inopinés », on entend des données décrivant de causes probables, de préférence avec des taux de probabilité associés, d'événements inopinés survenant sur les moteurs, notamment des pannes.

Par « opération de maintenance », on entend ici une intervention sur un moteur, qu'elle que soit la nature de celle-ci. Les opérations de maintenance regroupent les actions de dépannage et de réparation, de réglage, de révision, de contrôle et de vérification des moteurs.

Par « données opérationnelles de maintenances appliquées », on entend ici des données décrivant l'ensemble des opérations de maintenance mises en oeuvre sur les moteurs.

Par « données opérationnelles de configurations instanciées », on entend ici les données décrivant les configurations particulières des moteurs faisant suite à des modifications de configurations suite par exemple à des prescriptions de modification de la part du constructeur.

Tout d'abord, le système selon l'invention trace l'ensemble des données de tous les moteurs de la même classe, ce qui permet un suivi particulier de chaque moteur.

En outre, l'ensemble des données associées à moteur particulier constitue un « Livret Moteur Electronique » qui contient l'historique de toutes les opérations de maintenance appliquées au moteur, les données opérationnelles d'état d'usage ainsi que la configuration particulière de celui-ci et remplace le livret moteur manuscrit. L'analyse du ou des indicateurs de vol, ainsi que les prescriptions de maintenance, sont donc réalisées en fonction de ces données qui contiennent l'historique de toutes les opérations de maintenance appliquées au moteur, les conditions d'exploitation en vol ou au sol ainsi que l'historique de toutes les configurations, ce qui permet donc de prendre en compte la complexité de la maintenance d'un moteur d'hélicoptère. Par ailleurs, l'historique des données permet également de mettre en oeuvre des analyses de tendance, et donc de corriger et/ou améliorer notamment les données de définition de plan de maintenance et de définition des causes d'évènements inopinés.

Ensuite, le système met en oeuvre un système d'activation/désactivation d'alarme. Une alarme est activée au moins pour chaque opération de maintenance devant être effectuée dans l'immédiat sur un moteur. La mise en oeuvre des alarmes n'a pas seulement pour fonction d'alerter le technicien de maintenance qu'une opération de maintenance doit être effectuée sur un moteur, mais surtout de contraindre ce technicien à mettre à jour la base de données, ce qui garantit que les données de la base sont constamment complètes et pertinentes. Plus particulièrement, le système selon l'invention remplit le rôle des livrets de maintenance papier, ce qui oblige les techniciens de maintenance à nécessairement utiliser le système et donc le mettre à jour. La combinaison de la gestion technique d'alarme et d'obligation juridique d'utilisation du système produit donc ainsi l'effet technique d'une base de données complète.

Selon une variante du système, l'alarme bloque également toute action sur le système concernant les moteurs pour lesquels une alarme a été activée tant que les procédures correspondantes de désactivation par mise à jour des données n'ont pas été effectuées.

L'invention a également pour objet un procédé de prescription de maintenance de moteurs d'hélicoptère d'une même classe de moteurs, constitués d'éléments variables au cours du temps en fonction de leur état technique, d'échanges standard de pièces entre les moteurs et de remplacements de pièces par des pièces différentes, selon les caractéristiques de la revendication 6.

### BREVE DESCRIPTION DES FIGURES

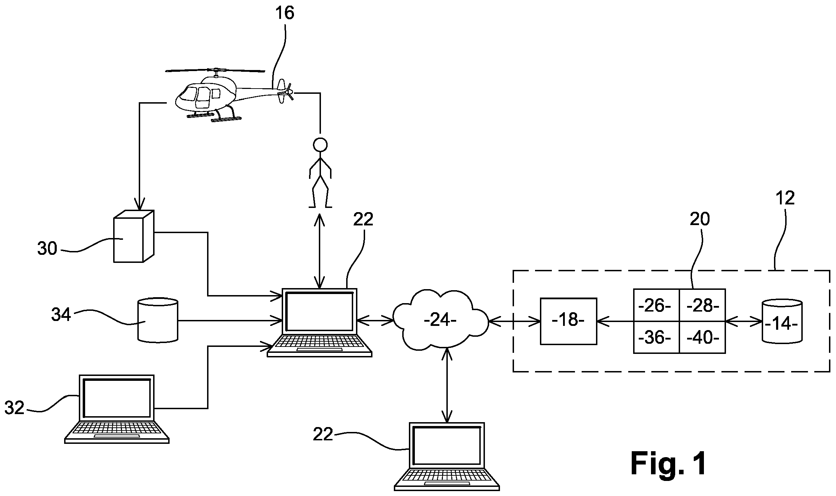

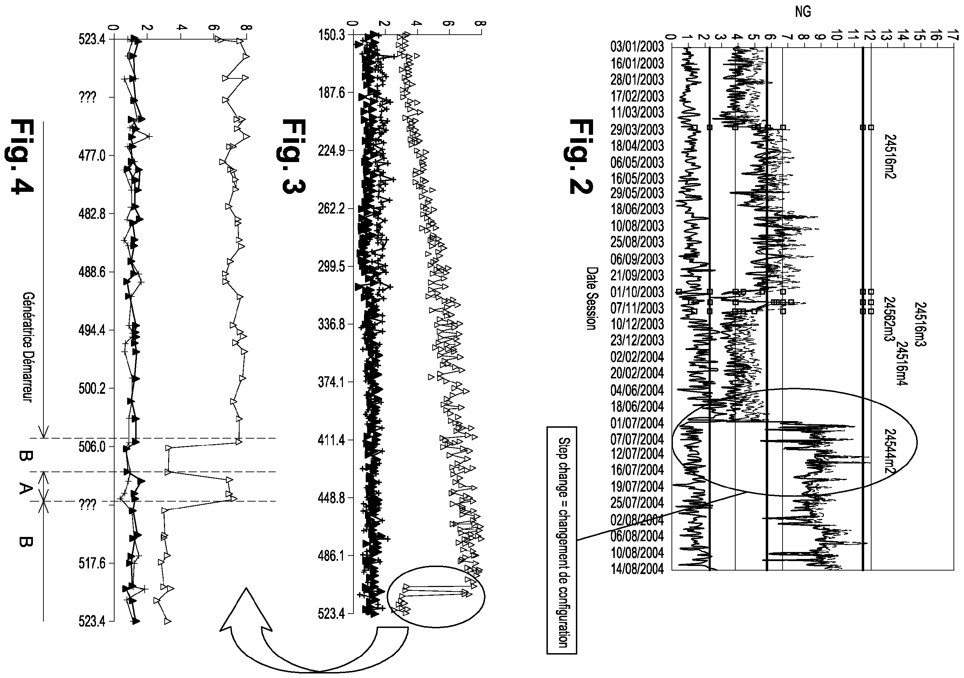

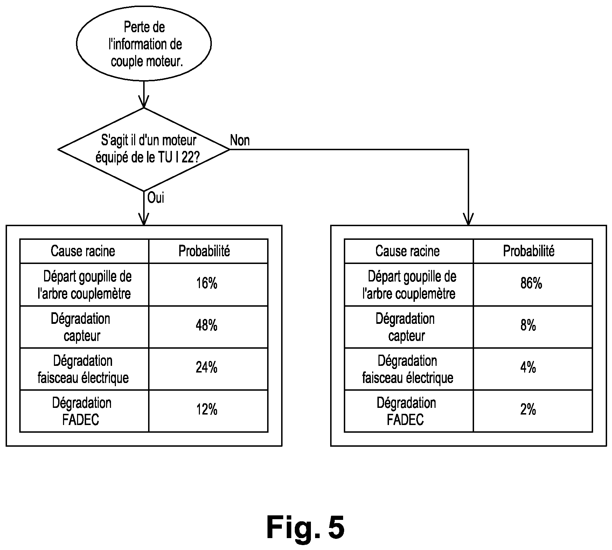

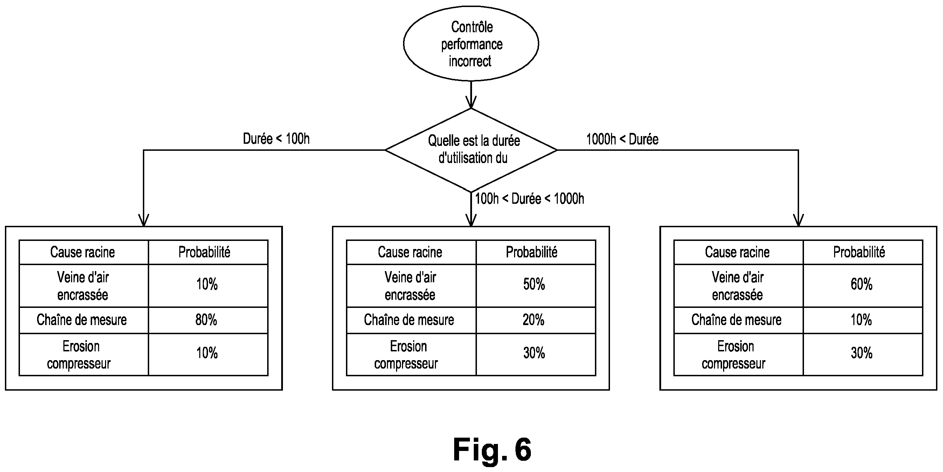

La présente invention sera mieux comprise à la lecture de la description qui va suivre, donnée uniquement à titre d'exemple, et faite en relation avec les dessins annexés, dans lesquels :
▪ la figure 1 est une vue schématique d'un système de prescription de maintenance selon l'invention ;
▪ la figure 2 est un tracé d'un premier indicateur d'état d'usage en fonction du temps mémorisé dans la base de données du système selon l'invention ;
▪ les figures 3 et 4 sont respectivement des tracés d'un second indicateur d'état d'usage mémorisé dans la base de données et de sa dérivée temporelle ; et
▪ les figures 5 et 6 sont des exemples d'arbre de probabilité utilisés pour l'identification de causes probables de panne.

### DESCRIPTION DETAILLEE DE L'INVENTION

Sur la figure 1, un système de prescription de maintenance selon l'invention est illustré sous la référence générale 10. Le système 10 comprend un serveur central 12 mettant en oeuvre une base de données 14 rassemblant des données relatives à des moteurs d'une flotte d'hélicoptères 16, un module logiciel 18 gérant l'accès au serveur 12 et la sécurité de celui-ci, et des modules logiciels 20 de traitement des données contenues dans la base 14.

La base de données 14 rassemble l'ensemble des données des moteurs de la flotte permettant un suivi continu de navigabilité de ces moteurs, et permettant ainsi de prescrire des opérations de maintenance de ceux-ci en fonction notamment de leurs configurations particulières et de l'historique des opérations appliquées sur ceux-ci.

L'accès au serveur central 12 se fait par tout moyen informatique 22 à disposition des utilisateurs, ordinateurs de bureau, ordinateurs portables, tablettes, « smartphones », ou autres, au travers d'un ou plusieurs réseaux de télécommunication 24, par exemple le réseau internet, des réseaux locaux, des réseaux privés virtuels, etc... Par opposition au serveur central 12, un moyen informatique 22 à disposition d'un utilisateur est désigné sous l'expression «poste local».

De préférence, un poste local 22 comporte un module logiciel mettant en oeuvre, avec le module de gestion d'accès et de sécurité 18, une architecture logicielle du type client/serveur web permettant ainsi une connexion avec le serveur central 12 par le biais d'un portail web unique à tous les utilisateurs.

La connexion au serveur central 12 se fait par authentification, l'utilisateur souhaitant se connecter au serveur central 12 ayant un compte sur ce dernier auquel il a accès en entrant au moins un login et un mot de passe.

Le module gestion d'accès et de sécurité 18 met par ailleurs en oeuvre des fonctions de sécurité et de confidentialité des connexions avec le serveur 12, notamment des fonctions d'antivirus, d'anti-intrusion, d'anti-aspiration, d'inspection de trafic anormal, etc..., et trace chaque connexion et chaque action réalisée par l'intermédiaire du serveur central 12 sur la base de données 14. En outre, chaque compte utilisateur est associé à des privilèges spécifiques en fonction de la nature de l'utilisateur (technicien de maintenance, organisation propriétaire/loueur des moteurs, constructeur des moteurs, etc...), ces privilèges définissant le type d'action que l'utilisateur peut entreprendre sur la base de données 14 et le type de données de la base 14 auxquelles l'utilisateur a accès.

Différents niveaux d'authentification peuvent être en outre mis en oeuvre en fonction des privilèges d'un utilisateur. De manière avantageuse, pour des privilèges portant sur une modification des données de la base 14, une authentification forte à base de signature numérique, ou électronique, est exigée.

La base de données 14 comprend notamment des données opérationnelles :
▪ d'état d'usage décrivant l'historique d'un ou plusieurs indicateurs d'état d'usage de chacun des moteurs, comme par exemple le nombre d'heures de vol ou le nombre de cycles de chacun des moteurs. Le nombre de cyles est un indicateur décrivant le nombre de fois que le régime d'un moteur parcourt intégralement une plage de régime donnée lors d'un vol. Un indicateur d'état d'usage peut également comprendre des conditions de vol d'un hélicoptère impactant l'état d'usage d'un moteur, comme par exemple un vol en environnement sablonneux, salin etc... ;
▪ de modifications possibles et de modification autorisées des moteurs. De manière avantageuse, la base de données 14 ne comprend pas uniquement les modifications autorisées, ou « navigables », des moteurs mais également toutes les modifications possibles des moteurs. Les configurations autorisées sont déduites des règles strictes d'implications et/ou d'exclusion. Ceci permet la comparaison entre une configuration particulière d'un moteur, qui peut être une configuration possible mais non autorisée, par exemple en raison d'une erreur de maintenance, et les configurations autorisées. Des erreurs de modification de configuration peuvent ainsi être détectées ;
▪ de définition de planifications de maintenance des moteurs en fonction de valeurs prédéterminées du ou des indicateurs d'état d'usage. Par exemple, il s'agit des opérations de maintenance à appliquer toutes les X heures de vols des moteurs, ou lorsque le nombre de cycle d'un moteur dépasse une valeur de seuil prédéterminée, ou lorsque le vol d'un moteur s'est réalisé dans un environnement particulier, etc...;
▪ de description de causes probables d'événements inopinés, notamment de pannes, en fonction des données de modifications possibles et autorisées et des données d'usage. De préférence, ces données de description sont organisées sous la forme d'un arbre de probabilités en fonction des modifications possibles des moteurs, comme cela sera expliqué plus en détail ci-dessous ;
▪ de maintenances appliquées décrivant la nature et l'historique des opérations de maintenance appliquées sur chacun des moteurs ;
▪ de configurations instanciées décrivant la nature et l'historique des modifications de configuration appliquées sur chacun des moteurs.

La base de données 14 comporte également des données opératoires décrivant le protocole opératoire de chaque opération de maintenance, à savoir la manière dont un technicien de maintenance doit procéder pour mener à bien l'opération de maintenance, par exemple sous la forme d'une documentation technique de référence.

Les données de définition de plan de maintenance, les données de définition de causes probables et les données opératoires étant susceptibles d'évoluer dans le temps (mises à jour, optimisation des plans de maintenance, des modes opératoires, identification améliorées des causes des pannes, etc...), la base de données 14 comprend toutes les versions de ces données, et notamment toutes les versions de la documentation technique de référence, ainsi que l'horodatage desdites versions, c'est-à-dire la période pendant laquelle elles étaient utilisées lors des opérations de maintenance et de modification de configuration, afin d'associer chaque opération appliquée et modification réalisée avec une version des données.

La base de données comporte également un ensemble de signatures temporelles caractéristiques d'événement, notamment de pannes, auxquels sont comparées les indicateurs d'état usage mémorisée dans la base 14 afin notamment de déterminer des évènements impromptus sur les moteurs, et ainsi déclencher une opération de maintenance, comme cela sera expliqué plus en détail par la suite.

Les modules de traitement logiciels 20 comprennent quant à eux un premier module 26 de consultation électronique de données de la base 14 permettant l'affichage interactif de celles-ci sous la forme de manuels de maintenance, de manuel de recherche de panne, de catalogues de rechanges, de catalogues d'outillage, de bulletins émis par le constructeur portant notamment sur les changements de configurations, ou autres, et ce pour chaque famille, ou classe, de moteurs gérée par le système 10. L'accès à cette documentation est géré par le module 26 de consultation, de préférence en fonction des privilèges alloués aux utilisateurs, de la configuration instanciée des moteurs, ou tout autre critère d'intérêt.

Les modules logiciels de traitement 20 comprennent un deuxième module 28 de traitement des données produites lors d'un vol, communément désignées «données de vol», le module 28 permettant la collecte des indicateurs d'état d'usage des moteurs, leur traitement et leur incorporation dans la base de données 14.

Plus particulièrement, le module de traitement 28 comporte un premier sous-module de collecte des indicateurs d'état d'usage. Les indicateurs et autres données de vols sont collectés par le serveur central 12 depuis différents canaux d'acquisition, notamment depuis des enregistreurs de vol 30, depuis des moyens de saisie manuelle 32, par exemple pour les moteurs qui ne sont pas équipés d'enregistreurs embarqués, et d'autres systèmes informatiques 34 qui collectent par exemple en premier lesdites données. La collecte est supervisée préférentiellement par un utilisateur depuis son poste local 22 qui peut ainsi les visualiser et, le cas échéant les modifier, avant de les télécharger sur le serveur central 12.

Le module 28 comporte en outre un deuxième sous-module de validation et de sauvegarde des données collectées. Ce deuxième sous-module vérifie la cohérence des données collectées avant leur sauvegarde dans la base 14. Notamment, le deuxième sous-module vérifie la conformité du format des données avec un ou plusieurs formats exigés pour celles-ci, vérifie que les données ne sont pas corrompues lors de la transmission, par exemple au moyen d'un échange de données entre le serveur central 12 et le poste local 22 afin de vérifier l'intégrité des données collectées. En cas de non cohérence des données, un signal d'alarme est émis pour le sous-module 28.

Un sous-module de prétraitement des données collectées peut également être prévu, par exemple pour générer des indicateurs d'état d'usage composites à partir des valeurs d'indicateurs d'état d'usage téléchargées dans le serveur central 12. En outre, les valeurs des indicateurs, qui synthétisent l'état d'usage d'un moteur, peuvent être produites par calcul par exemple en fonction de données brutes de vol enregistrées de manière continue ou régulière lors d'un vol. De manière optionnelle, les données brutes de vol peuvent être téléchargées directement dans le serveur central 12 et le sous-module de prétraitement met en oeuvre les calculs produisant les valeurs des indicateurs.

Les modules logiciel 20 comportent également un troisième module 36 de prescription de maintenance qui est exécuté une fois que des nouvelles valeurs des indicateurs d'état d'usage d'un moteur sont enregistrées dans la base de données 14, ou indépendamment d'une nouvelle collecte de données, sur ordre d'un utilisateur autorisé. Notamment, les dernières valeurs des indicateurs d'usage du moteur sont comparées à des valeurs prédéterminées définies dans les données opérationnelles de plan de maintenance, afin de déterminer si une opération de maintenance doit être appliquée sur le moteur. Les plans de maintenance correspondent notamment à des opérations de maintenance prédictibles en fonction de la valeur courante des indicateurs d'état d'usage. Par exemple, une opération de maintenance est exécutée toutes les X heures de vols.

Toutefois, la base de données 14 comportant l'historique des indicateurs d'état d'usage, l'historique des modifications de configuration et l'historique des opérations de maintenance appliquées sur chaque moteur, il est possible de mettre en oeuvre des tests plus complexes que la simple comparaison d'une valeur à un seuil de déclenchement pour déterminer si une opération de maintenance doit être appliquée ou non. Notamment, une analyse de tendance des indicateurs d'état d'usage peut être mise en oeuvre par le module 36 puisque l'on connait la variation desdits indicateurs dans le temps, ces analyses pouvant ou non être pondérées par les configurations instanciées des moteurs et/ou des opérations de maintenance déjà appliquées sur ceux-ci.

Lorsqu'une opération de maintenance devant être appliquée sur un moteur est identifiée, un signal d'alarme est émis par le troisième module 36. En outre, le troisième module 36 identifie en fonction de la configuration instanciée du moteur, et optionnellement des opérations de maintenance déjà appliquées sur celui-ci, les données décrivant le protocole opératoire à mettre en oeuvre pour réaliser l'opération de maintenance identifiée, ces données étant mise à la disposition du technicien de maintenance en charge de ladite opération.

Le troisième module 36 est également configuré pour déterminer si des évènements non prédictibles se sont produits. Notamment, les indicateurs d'état d'usage mémorisés dans la base de données 14 sont comparés à la base de signatures temporelles caractéristiques d'événements déclencheurs d'opérations de maintenance. On sait par exemple que certains indicateurs adoptent une variation modérée de leur valeur lors d'un fonctionnement normal des moteurs, comme cela est illustré par exemple aux figures 2 et 3 qui illustrent des changements brusques de la valeur d'un indicateur d'état d'usage. Une comparaison de l'évolution temporelle de ces indicateurs avec un profil jugé anormal de variation permet donc de déterminer qu'une opération de maintenance est susceptible de devoir être appliquée en dehors des opérations prédictibles prescrites dans les plans de maintenance.

Lorsque la comparaison avec la base de signature est positive, une analyse est réalisée par le troisième module 36 sur les données opérationnelles de maintenance appliquées et sur les données de configuration instanciées pour savoir si une intervention antérieure sur le moteur est susceptible d'expliquer l'évolution anormale de ou des indicateurs d'état d'usage en cause. Par exemple, l'augmentation brusque de l'indicateur de la figure 2 s'explique par un changement de configuration du moteur, alors que les variations brusques de l'indicateur illustré aux figures 3 et 4 s'expliquent par deux remplacements successifs d'un module du moteur, à savoir sa génératrice, ces informations étant mémorisées, et notamment horodatées dans la base 14. Les causes probables identifiées par cette analyse sont listées et émises par le troisième module 36 à destination des utilisateurs autorisés. En outre, les signatures temporelles peuvent également être associées à des pannes identifiées. Une opération de maintenance est ainsi prescrite par le troisième module 36. Parallèlement, ce dernier émis également un signal d'alarme.

On notera que la mémorisation de l'historique des changements de configuration, des maintenances appliquées et des indicateurs d'état d'usage permet de réaliser des analyses tenant compte de la complexité d'un moteur d'hélicoptère. En effet, comme précédemment décrit, un moteur d'hélicoptère est un système hypercritique dont le fonctionnement est influencé par l'ensemble des interventions et conditions d'usage qu'il a subi. Notamment, l'état d'usage d'un moteur ne dépend pas uniquement de la dernière opération de maintenance appliquée ou de la dernière modification de configuration. Ainsi, une opération de maintenance, ou une modification de configuration, couplée à opération plus ancienne peut mener à un évènement inopportun, que seule une analyse en fonction des historiques mémorisés dans la base de données 14 permet de détecter.

Par ailleurs, dans le cas où l'événement détecté par le troisième module 36 est une panne, ou suite à la saisie manuelle des données caractéristiques d'une panne par un utilisateur, le troisième module 36 met en oeuvre un algorithme d'identification des causes probable de la panne en fonction des opérations de maintenance appliquées, de la configuration instanciée du moteur, des indicateurs d'état d'usage et des données de modification autorisées de configurations.

Notamment, les données de causes probables de pannes de la base de données 14 sont organisées sous la forme d'un arbre de probabilités. Deux exemples simples d'arbres de probabilité sont illustrés aux figures 4 et 5, la figure 4 illustrant des causes probables d'une perte d'information de la part d'un capteur de couple moteur, et la figure 5 illustrant des causes probables d'une perte de performance d'un moteur. L'arbre de probabilité est interrogé notamment en fonction de la configuration instanciée du moteur et parcouru à l'aide d'un algorithme de type baysien. Le troisième module 36 émet à la fin de son analyse une liste de causes probables de la panne, de préférence avec une probabilité associées à chacune d'entre elle, ainsi qu'une prescription de maintenance associée. Parallèlement, le troisième module 36 émet un signal d'alarme. On notera que les arbres illustrés aux figures 4 et 5 sont très simples et qu'en pratique le nombre de configurations possibles étant très important, l'arbre de probabilité est également complexe.

Enfin, les modules de traitement 20 comprennent un quatrième module 40 de gestion des alarmes qui reçoit des autres modules les signaux d'alarme. Le module 40 de gestion des alarmes tient à jours une liste d'alarmes associées à chaque évènement générateur d'alarme, ainsi qu'une liste d'actions à mener sur la base de données 14 pour lever les alarmes.

Notamment, une alarme est levée lorsqu'une opération de maintenance a été effectuée par un technicien de maintenance et que ce dernier a téléchargé, avec signature numérique, le descriptif et l'horodatage de l'opération de maintenance ou le changement de configuration qu'il a opérée. De manière préférentielle, en cas de panne, l'alarme est levée lorsque le technicien renseigne également, avec signature numérique, les informations concernant la panne qu'il a identifiée, ce qui permet par recompilation des données de causes probables de panne d'affiner ces dernières. Dans une variante de l'invention, le module 40 peut également bloquer toute opération portant sur les données de la base 14 concernant un moteur tant que le descriptif de l'opération de maintenance ou du changement de configuration sur le moteur n'a pas été téléchargé.

## Revendications

1. Système de prescription de maintenance de moteurs d'hélicoptère d'une même classe de moteurs, constitués d'éléments variables au cours du temps en fonction de leur état technique, d'échanges standard de pièces entre les moteurs et de remplacements de pièces par des pièces différentes, comportant :
▪ une base de données centralisée (14) mémorisant des données opérationnelles :
o d'état d'usage décrivant l'historique d'un ou plusieurs indicateurs d'état d'usage de chacun des moteurs ;
∘ de modifications possibles et de modification autorisées des moteurs ;
∘ de définition de plans de maintenance des moteurs en fonction de valeurs prédéterminées du ou des indicateurs d'état d'usage ;
∘ de description de causes probables d'évènements inopinés en fonction des données de modifications possibles et autorisées et des données d'usage;
∘ de maintenances appliquées décrivant l'historique des opérations de maintenance appliquées sur chacun des moteurs ;
∘ de configurations instanciées décrivant l'historique des modifications de configuration appliquées sur chacun des moteurs ; et
▪ des enregistreurs de vol (30) du ou des indicateurs d'état d'usage de chacun des moteurs et de mise à jour des données d'état d'usage en fonction de la valeur acquise du ou des indicateurs de chaque moteur ;
▪ des moyens d'identification d'une opération de maintenance à appliquer sur chacun des moteurs en fonction des données opérationnelles de la base de données ; lesdits moyens d'identification d'une opération de maintenance à appliquer étant configurés pour comparer des indicateurs d'état d'usage de la base de données à une base de signatures temporelles caractéristiques déclencheurs d'opérations de maintenance ; lorsque la comparaison avec la base de signature est positive, lesdits moyens d'identification étant configurés pour analyser les données opérationnelles de maintenance appliquées et les données de configuration instanciées pour déterminer si le déclencheur détecté est du à une intervention antérieure ;
▪ des moyens de génération d'une alarme continue pour chaque opération de maintenance à effectuer identifiée après suppression des déclencheurs dus à une intervention antérieure ;
▪ des moyens de mise à jour avec signature numérique des données de maintenance appliquées et des données de configuration instanciées en fonction de chaque opération de maintenance appliquées sur chacun des moteurs ; et
▪ des moyens de désactivation d'une alarme activée si au moins la mise à jour signée numériquement des données résultantes de l'opération de maintenance appliquée identifiée associée à l'alarme est réalisée.

2. Système selon la revendication 1, dans lequel les moyens d'identification d'opération de maintenance à appliquer comprennent :
▪ des moyens d'identification d'une condition de déclenchement d'une opération de maintenance par comparaison des données d'état d'usage de chaque moteur avec une base de signatures temporelles de la base de données centralisée, caractéristiques d'événements déclencheurs d'intervention ;
▪ des moyens d'analyse des données de maintenances appliquées et de configurations instanciées en fonction des données de modifications possibles et autorisées des moteurs et des données d'état d'usage pour identifier si d'une ou plusieurs opérations de maintenances appliquées antérieures à l'apparition de la condition de déclenchement sont susceptibles d'influencer l'apparition de celle-ci ; et
▪ des moyens d'émission d'informations concernant l'opération de maintenance à appliquer identifiée et la ou les opérations de maintenances appliquées identifiées.

3. Système selon la revendication 1 ou 2, dans lequel les moyens d'identification à appliquer comprennent :
▪ des moyens d'identification d'une condition de déclenchement d'une opération de maintenance par comparaison des données d'état d'usage de chaque moteur avec une base de signatures temporelles de la base de données centralisée, caractéristiques d'événements déclencheurs d'intervention ;
▪ des moyens de résolution de d'événements inopinés, déclenchés lorsque la condition de déclenchement identifiée est caractéristique d'un évènement inopiné, et identifiant des causes possibles de l'événement inopiné en fonction des données d'opérations de maintenance appliquées, des données de configurations instanciées, des données d'usage et de données de descriptions de causes probables et des données de modification autorisées de configurations ; et
▪ des moyens d'émission d'information sur les causes probables identifiées.

4. Système selon la revendication 3, comprenant des moyens de mise à jour avec signature numérique des données de description de causes probables d'événements inopinés en fonction des causes identifiées pour chaque évènement inopiné et dans lequel les moyens de désactivation sont aptes à désactiver une alarme associée à un évènement inopiné si les données de description de causes probables d'événements inopinées sont mises à jour en fonction de la cause identifiée de l'événement.

5. Système selon l'une quelconque des revendications précédentes, comprenant des moyens d'analyse de tendance aptes à analyser les données d'état d'usage des moteurs et à modifier les données de définition de planification de maintenance en fonction de ladite analyse.

6. Procédé de prescription de maintenance de moteurs d'hélicoptère d'une même classe de moteurs, constitués d'éléments variables au cours du temps en fonction de leur état technique, d'échanges standard de pièces entre les moteurs et de remplacements de pièces par des pièces différentes, ledit procédé étant mis en oeuvre par un ordinateur et un enregistreurs de vol (30) du ou des indicateurs d'état d'usage de chacun des moteurs et de mise à jour des données d'état d'usage en fonction de la valeur acquise du ou des indicateurs de chaque moteur, ledit procédé comportant :
▪ la mémorisation de données opérationnelles :
∘ d'état d'usage décrivant l'historique d'un ou plusieurs indicateurs d'état d'usage de chacun des moteurs ;
∘ de modifications possibles et de modification autorisées des moteurs ;
∘ de définition de plans de maintenance des moteurs en fonction de valeurs prédéterminées du ou des indicateurs d'état d'usage ;
∘ de description de causes probables d'évènements inopinés en fonction des données de modifications possibles et autorisées et des données d'usage;
∘ de maintenances appliquées décrivant la nature et l'historique des opérations de maintenance appliquées sur chacun des moteurs ;
∘ de configurations instanciées décrivant la nature et l'historique des modifications de configuration appliquées sur chacun des moteurs ; et
▪ l'acquisition du ou des indicateurs d'état d'usage de chacun des moteurs et de mise à jour des données d'état d'usage en fonction de la valeur acquise du ou des indicateurs de chaque moteur ;
▪ l'identification d'une opération de maintenance à appliquer sur chacun des moteurs en fonction des données opérationnelles de la base de données ; l'identification d'une opération de maintenance à appliquer étant réalisée par comparaison des indicateurs d'état d'usage de la base de données à une base de signatures temporelles caractéristiques déclencheurs d'opérations de maintenance ; lorsque la comparaison avec la base de signature est positive l'identification d'une opération de maintenance analyse les données opérationnelles de maintenance appliquées et les données de configuration instanciées pour déterminer si le déclencheur détecté est due à une intervention antérieure ;
▪ la génération d'une alarme continue pour chaque opération de maintenance à effectuer identifiée après suppression des déclencheurs dus à une intervention antérieure ;
▪ la mise à jour avec signature numérique des données de maintenance appliquées et des données de configuration instanciées en fonction de chaque opération de maintenance appliquées sur chacun des moteurs ; et
▪ la désactivation d'une alarme activée si au moins la mise à jour signée numériquement des données résultantes de l'opération de maintenance appliquée identifiée associée à l'alarme est réalisée.
▪ des données de procédure de maintenance décrivant une procédure de maintenance pour chaque plan de maintenance en fonction des configurations possibles et autorisées sur la classe de moteurs ;
▪ des moyens d'identification d'un plan de maintenance à effectuer ou d'une panne à réparer sur chacun des moteurs en fonction de la valeur du ou des indicateurs d'état et des données de définition ;
▪ des moyens de description d'une procédure de maintenance en fonction des données de l'opération de maintenance identifiée et des données de configuration instanciée.

## Patentansprüche

1. Wartungsvorschriftensystem für Hubschraubermotoren derselben Motorenklasse, bestehend aus zeitlich variablen Elementen, entsprechend des technischen Zustandes, des standardmäßigen Austauschs von Teilen zwischen den Motoren und des Austauschs von Teilen durch abweichende Teile, bestehend aus:
▪ einer zentralisierten Datenbank (14) zum Speichern von Betriebsdaten:
∘ über den Betriebszustand, mit Beschreibung des Verlaufs eines oder mehrerer Betriebszustandsanzeiger jedes der Motoren;
∘ über mögliche Modifikationen und genehmigte Modifikationen der Motoren;
∘ mit der Definition von Wartungsplänen für die Motoren entsprechend den vorher festgelegten Werten der Betriebszustandsanzeiger;
∘ mit der Beschreibung der wahrscheinlichen Ursachen unerwarteter Ereignisse, in Abhängigkeit von den Daten für mögliche und genehmigte Modifikationen und der Betriebsdaten;
∘ über die durchgeführten Wartungsarbeiten, mit Beschreibung des Verlaufs der Wartungsarbeiten bei jedem einzelnen Motor;
∘ instanziierte Konfigurationen zur Beschreibung des Verlaufs der bei jedem Motor durchgeführten Modifikationen der Konfiguration; und
▪ Flugdatenschreiber (30) des oder der Betriebszustandsanzeigers der einzelnen Motoren und zur Aktualisierung der Betriebszustandsdaten entsprechend den vom Betriebszustandsanzeiger jedes Motors erhaltenen Werte;
▪ Mittel zum Identifizieren eines Wartungsvorgangs, der in Abhängigkeit von den Betriebsdaten aus der Datenbank für jeden der Motoren durchzuführen ist; diese Mittel zum Identifizieren eines durchzuführenden Wartungsvorgangs sind dazu konfiguriert, Betriebszustandsanzeiger der Datenbank mit einer Datenbank mit charakteristischen, zeitbasierten Signaturen zur Auslösung von Wartungsarbeiten zu vergleichen; wenn der Vergleich mit der Signaturdatenbank positiv ist, werden diese Identifikationsmittel dazu konfiguriert, die angewandten Betriebsdaten für die Wartung und die instanziierten Konfigurationsdaten zu analysieren um zu entscheiden, ob der erkannte Auslöser auf vorangehende Arbeiten zurückzuführen ist;
▪ Mittel zur Erzeugung eines stetigen Alarms für jeden durchzuführenden Wartungsvorgang, der nach Ausschalten der Auslöser aufgrund vorangehender Arbeiten identifiziert wurde;
▪ Mittel zur Aktualisierung mit digitaler Signatur der angewandten Wartungsdaten und der instanziierten Konfigurationsdaten in Abhängigkeit von jedem bei den einzelnen Motoren durchgeführten Wartungsvorgang; und
▪ Mittel zur Deaktivierung eines aktivierten Alarms, wenn mindestens die digital signierte Aktualisierung der Daten, die sich aus dem mit dem Alarm zusammenhängenden durchgeführten Wartungsvorgang ergeben, durchgeführt wurde.

2. System gemäß Anspruch 1, bei dem die Mittel zum Identifizieren eines durchzuführenden Wartungsvorgangs umfassen;
▪ Mittel zum Identifizieren einer Bedingung zum Auslösen eines Wartungsvorgangs durch Vergleich der Betriebszustandsdaten jedes Motors mit einer zeitbasierten Signatur- Datenbank der zentralisierten Datenbank, mit charakteristischen Ereignissen für die Auslösung von Arbeiten;
▪ Mittel zur Analyse der angewandten Betriebsdaten für die Wartung und der instanziierten Konfigurationsdaten in Abhängigkeit von den Daten für mögliche und genehmigte Modifikationen der Motoren und der Betriebsdaten, um zu identifizieren, ob ein oder mehrere Wartungsvorgänge, die vor dem Auftreten der Auslösebedingung durchgeführt wurden, deren Eintreten möglicherweise ausgelöst haben könnten; und
▪ Mittel zur Informationsausgabe bezüglich des identifizierten, durchzuführenden Wartungsvorgangs und dem oder den identifizierten, durchgeführten Wartungsvorgängen

3. System gemäß Anspruch 1 oder 2, bei dem die Mittel zum Identifizieren eines durchzuführenden Wartungsvorgangs umfassen:
▪ Mittel zum Identifizieren einer Bedingung zum Auslösen eines Wartungsvorgangs durch Vergleich der Betriebszustandsdaten jedes Motors mit einer zeitbasierten Signatur- Datenbank der zentralisierten Datenbank, mit charakteristischen Ereignissen für die Auslösung von Arbeiten;
▪ Mittel zum Beheben unerwarteter Ereignisse, ausgelöst wenn die identifizierte Auslösebedingung charakteristisch für ein unerwartetes Ereignis ist und zur Identifikation der möglichen Ursachen des unerwarteten Ereignisses, in Abhängigkeit von den Daten der durchgeführten Wartungsvorgänge, der instanziierten Konfigurationsdaten, der Betriebsdaten und der Daten zur Beschreibung möglicher Ursachen sowie die Daten zu genehmigten Konfigurationsmodifikationen; und
▪ Mittel zur Ausgabe von Informationen über die identifizierten möglichen Ursachen.

4. System gemäß Anspruch 3, umfassend Mittel zur Aktualisierung mit digitaler Signatur der Daten zur Beschreibung möglicher Ursachen unerwarteter Ereignisse, in Abhängigkeit von den für jedes unerwartete Ereignis identifizierten Ursachen und in dem die mit den Deaktivierungsmitteln ein Alarm in Verbindung mit einem unerwarteten Ereignis abgeschaltet werden kann, wenn die Daten zur Beschreibung möglicher Ursachen unerwarteter Ereignisse, in Abhängigkeit von der identifizierten Ursache des Ereignisses aktualisiert werden.

5. System nach irgendeinem der vorstehenden Ansprüche, umfassend Mittel zur Tendenzanalyse, mit denen die Betriebsdaten der Motoren analysiert und die Definitionsdaten zur Planung der Wartung in Abhängigkeit von dieser Analyse geändert werden können.

6. Verfahren für die Wartungsvorschriften für Hubschraubermotoren derselben Motorenklasse, bestehend aus Elementen, die zeitlich variabel sind, entsprechend ihres technischen Zustandes, des standardmäßigen Austauschs von Teilen zwischen den Motoren und des Austauschs von Teilen durch abweichende Teile, wobei dieses Verfahren von einem Computer und einem Flugschreiber (30) des oder der Betriebszustandsanzeiger jedes Motors eingeleitet wird sowie zur Aktualisierung der Betriebszustandsdaten in Abhängigkeit vom erfassen Wert des oder der Anzeiger jedes Motors, wobei dieses Verfahren umfasst:
▪ Speicherung der Betriebsdaten:
∘ des Gebrauchszustandes, mit Beschreibung des Verlaufs eines oder mehrerer Gebrauchszustandsanzeiger jedes der Motoren;
∘ möglicher Modifikationen und genehmigter Modifikationen der Motoren;
∘ Definition von Wartungsplänen für die Motoren entsprechend den vorher festgelegten Werten der Betriebszustandsanzeiger;
∘ Beschreibung der wahrscheinlichen Ursachen unerwarteter Ereignisse, in Abhängigkeit von den Daten für mögliche und genehmigte Modifikationen und der Betriebsdaten;
∘ durchgeführte Wartungsarbeiten, mit Beschreibung des Verlaufs der Wartungsarbeiten bei jedem einzelnen Motor;
∘ instanziierte Konfigurationen zur Beschreibung des Verlaufs der bei jedem Motor durchgeführten Modifikationen der Konfiguration; und
▪ Erfassen des oder der Betriebszustandsanzeigers der einzelnen Motoren und der Aktualisierung der Betriebszustandsdaten entsprechend den von dem oder den Betriebszustandsanzeigern jedes Motors erhaltenen Wert;
▪ Identifikation eines Wartungsvorgangs der in Abhängigkeit von den Betriebsdaten aus der Datenbank für jeden der Motoren durchzuführen ist; die Identifikation eines durchzuführenden Wartungsvorgangs erfolgt durch Vergleich der s Betriebszustandsanzeiger der Datenbank mit einer Datenbank mit charakteristischen zeitbasierten Signaturen zur Auslösung von Wartungsarbeiten; wenn der Vergleich mit der Signaturdatenbank positiv ist, analysiert die Identifikation eines Wartungsvorgangs die angewandten Betriebsdaten für die Wartung und die instanziierten Konfigurationsdaten um zu entscheiden, ob der erkannte Auslöser auf vorangehende Arbeiten zurückzuführen ist;
▪ die Erzeugung eines stetigen Alarms für jeden durchzuführenden Wartungsvorgang, der nach Ausschalten der Auslöser aufgrund vorangehender Arbeiten identifiziert wurde;
▪ Aktualisierung mit digitaler Signatur der angewandten Wartungsdaten und der instanziierten Konfigurationsdaten in Abhängigkeit von jedem bei den einzelnen Motoren durchgeführten Wartungsvorgang; und
▪ Deaktivierung eines aktivierten Alarms, wenn mindestens die digital signierte Aktualisierung der Daten, die sich aus dem mit dem Alarm zusammenhängenden durchgeführten Wartungsvorgang ergeben, durchgeführt wurde.
▪ Daten zu Wartungsverfahren, mit Beschreibung eines Wartungsverfahrens für jeden Wartungsplan, in Abhängigkeit von den möglichen und zulässigen Konfigurationen der Motorenklasse;
▪ Mittel zur Identifikation eines durchzuführenden Wartungsplans oder einer an den jeweiligen Motoren zur reparierenden Panne, in Abhängigkeit vom Wert des oder der Betriebszustandsanzeiger und der Definitionsdaten;
▪ Mittel zur Beschreibung eines Wartungsvorgangs in Abhängigkeit von den Daten des identifizierten Wartungsvorgangs und der instanziierten Konfigurationsdaten.

## Claims

1. A system for prescribing maintenance of helicopter engines belonging to the same engine class and formed by elements that vary over time depending on the technical condition thereof, the standard replacement of parts between engines, and the replacement of parts with different parts, comprising:
a centralized database (14) storing operational data relating to:
working condition, describing the history of one or more working condition indicators of each of the engines;
possible modifications and authorized modifications of the engines;
a definition of maintenance plans for the engines according to predetermined values of the working condition indicator(s);
a description of the probable causes of unscheduled events according to the data relating to possible and authorized modifications and the working condition data;
maintenance applied, describing the history of maintenance operations applied to each of the engines; and
instantiated configurations, describing the history of the configuration modifications applied to each of the engines; and
flight recorders (30) the working condition indicator(s) of each of the engines and means for updating the working condition data depending on the acquired value of the indicator(s) of each engine;
means for identifying a maintenance operation to be applied to each of the engines depending on the operational data in the database; said means for identifying a maintenance operation to be applied being configured to compare the working condition indicator(s) of said database with a time signature database that triggers maintenance operations; when the comparison with the signature database is positive, said identification means being configured to analyze the applied maintenance operational data and the instantiated configuration data to determine whether the detected trigger is due to a previous intervention;
means for generating a continuous alarm for each identified maintenance operation to be performed after removing triggers due to previous intervention;
means for a digitally-signed updating with digital signature of the applied maintenance data and the instantiated configuration data according to each maintenance operation applied to each of the engines; and
means for deactivating an activated alarm if at least the digitally-signed update digitally signed of the data resulting from the identified applied maintenance operation associated with the alarm is carried out.

2. The system of claim 1, wherein the means for identifying the maintenance operation to be applied comprise:
means for identifying a condition for triggering a maintenance operation by comparing working condition data of each engine with a time signature base of the centralized database, characteristic of events triggering a maintenance operation;
means for analyzing the data relating to maintenances applied and instantiated configurations according to the possible and authorized engine modification data and to the working condition data to identify whether one or several maintenance operations applied prior to the occurrence of the triggering condition may have influenced the occurrence thereof; and
means for transmitting information relative to the identified maintenance operation to be applied and the identified maintenance operation(s) applied.

3. The system of claim 1 or 2, wherein the identification means to be applied comprise:
means for identifying a condition for triggering a maintenance operation by comparing working condition data of each engine with a time signature base of the centralized database, characteristic of events triggering a maintenance operation;
means for solving unscheduled events, triggered when the identified triggering condition is characteristic of an unscheduled event, and identifying possible causes of the unscheduled event according to the applied maintenance operation data, to the instantiated configuration data, to the working condition data, and to the data relating to the description of probable causes, and to the data relative to authorized configuration modifications; and
means for transmitting information relative to the identified probable causes.

4. The system of claim 3, comprising means of digitally-signed update with digital signature of data describing probable causes of unscheduled events according to the causes identified for each unscheduled event and wherein the deactivation means are capable of deactivating an alarm associated with an unscheduled event if the data describing probable causes of unscheduled events are updated according to the identified cause of the event.

5. The system of one of the preceding claims, comprising tendency analysis means capable of analyzing the engine working condition data and of modifying the maintenance plan definition data according to said analysis.

6. A method of prescribing maintenance of helicopter engines belonging to the same engine class, consisting of variable elements over time according to their technical state, standard exchange of parts between the engines and replacements of parts by means of different parts, said method being implemented by a computer and a flight recorder (30) of the use state indicator (s) of each of the engines and updating the usage status data as a function of the acquired value of the indicator or indicators of each engine, said method comprising:
storing operational data relating to:
working condition, describing the history of one or more working condition indicators of each of the engines;
possible modifications and authorized modifications of the engines;
a definition of maintenance plans for the engines according to predetermined values of the working condition indicator(s);
a description of the probable causes of unscheduled events according to the data relating to possible and authorized modifications and to the working condition data;
maintenance applied, describing the nature and history of maintenance operations applied to each of the engines;
instantiated configurations, describing the nature and the history of the configuration
modifications applied to each of the engines; and
acquiring the working condition indicator(s) of each of the engines and updating the working condition data depending on the acquired value of the indicator(s) of each engine;
identifying a maintenance operation to be applied to each of the engines depending on the operational data in the database; the identification of a maintenance operation to be applied being performed by comparison of the usage status indicators of the database with a time signature database that triggers maintenance operations; when the comparison with the signature database is positive, for each trigger detected, the identification of a maintenance operation analyzes the applied maintenance operational data and the instantiated configuration data to determine whether the detected trigger is due to a previous intervention ;
generating a continuous alarm for each identified maintenance operation to be performed after removing triggers due to previous intervention;
updating with digital signature the applied maintenance data and the instantiated configuration data according to each maintenance operation applied to each of the engines; and
deactivating an activated alarm if at least the digitally-signed update of the data resulting from the identified applied maintenance operation associated with the alarm is carried out.
maintenance procedure data describing a maintenance procedure for each maintenance plan according to the possible and authorized configurations on the engine class;
means for identifying a maintenance plan to be carried out or a failure to be repaired on each of the engines according to the value of the working condition indicators and to the definition data;
means of description of a maintenance procedure according to the data of the identified maintenance operation and to the instantiated configuration data.
